# EUROPEAN PATENT APPLICATION

(11) **EP 4 585 928 A1**
(43) Date of publication of application: **16.07.2025**
(21) Application number: 22958104.6
(22) Date of filing: 07.09.2022
(51) Int. Cl.: G01N 35/10

(54) **DISPENSER AND ANALYSIS DEVICE**

(71) Applicant: HITACHI HIGH-TECH CORPORATION, Tokyo 105-6409 (JP)
(72) Inventor: SHIBAHARA, Masashi, Tokyo 105-6409 (JP); HARA, Daisuke, Tokyo 105-6409 (JP)
(74) Representative: Strehl & Partner mbB
(86) International application number: PCT/JP2022/033595
(87) International publication number: WO 2024/053025

(57) **Abstract**

A multichannel dispenser 100 includes a plurality of syringes 103 each of which includes a plunger 101 and a housing 102, a drive motor 104 that drives at least one of the plungers 101, tip end portions 106 to which dispensing tips 105 are to be attached, and tubes 107A, 107B causing the syringes 103 and the tip end portions 106 to communicate with each other. The outer diameter 109 of the housing 102 is greater than a pitch distance 108 between the dispensing tips 105, and the plurality of syringes 103 is arranged in multiple lines. Thus, it is possible to increase a plunger diameter as compared to the related art, and to perform dispensing in amounts ranging from a slight amount to a great amount.

## Description

### Technical Field

The present invention relates to a dispenser and an analysis device.

### Background Art

As one example of a multichannel dispensing device, Patent Literature 1 describes that a plurality of dispensing pressurizers each of which has a syringe, a piston, an electromagnetic valve, a pipe, and a piston driver that drives the piston, a multichannel nozzle having, at one end thereof, a plurality of nozzles to which a plurality of nozzle tips is attachable, and a controller that drives the piston driver and drives the electromagnetic valve are provided, the electromagnetic valve is provided between the syringe and the pipe, and the pipes and the other end of the nozzle are joined to each other.

### Citation List

### Patent Literature

PTL 1: JP2008-246363A

### Summary of Invention

### Technical Problem

In test and analysis in, e.g., a biochemical field, a dispensing operation of separately transferring liquid such as a sample or a reagent into a sample reaction plate which is a dedicated container may be performed. For the dispensing operation, a multichannel dispensing device is used, which includes a predetermined number of dispensing nozzles for aspirating and discharging the liquid.

The sample reaction plate is provided with many (for example, 96) small holes for housing the sample, and tip end portions of dispensing tips attached to the dispensing nozzles are inserted into these small holes. Then, the liquid in the small holes is aspirated into the dispensing tips, and then discharged. In this manner, dispensing is performed.

In a case where, e.g., the reagent is dispensed into a 96-hole sample plate having 8 × 12 holes, which is a general sample reaction plate, dispensing can be performed quicker when dispensing is performed 12 times in total by a dispenser having eight lines of nozzles as in Patent Literature 1 than when the reagent is dispensed 96 times by a single dispenser. For a much quicker dispensing method, a dispenser having 96 nozzles may be used.

Here, as the diameter of the plunger of the dispenser increases, a plunger movement distance for aspirating and discharging a solution decreases, and a greater amount of solution can be dispensed in shorter time. On the other hand, as the plunger diameter decreases, the accuracy of a solution amount can be improved, but for dispensing a greater amount, the plunger movement distance increases and more time is necessary for dispensing.

In order to increase the hole density of the sample reaction plate, there has been demanded pitch width and size reduction in a multichannel dispensing device so that the multichannel dispensing device can be applied to various dispensing amounts ranging from a slight amount to a great amount.

For a great amount, it has been demanded that the plunger diameter is increased as much as possible. This is because as described above, as the plunger diameter increases, a greater amount can be dispensed even with a short plunger movement distance, and dispensing can be performed in shorter time.

On the other hand, the plunger pitch of the multichannel dispensing device depends on the hole pitch of the sample reaction plate, which leads to a problem that there is a limitation on an increase in the plunger diameter.

The present invention provides a dispenser and an analysis device, which are capable of performing dispensing in amounts ranging from a slight amount to a great amount while having a greater plunger diameter as compared to the related art.

### Solution to Problem

The present invention has a plurality of solutions to solve the above-described problem, but as one example, is a dispenser including a plurality of syringes each of which includes a plunger and a housing, a drive motor that drives at least one of the plungers, one or more tip end portions to which one or more dispensing tips are to be attached, and one or more tubes causing the syringes and the tip end portions to communicate with each other, in which the outer diameter of the housing is greater than an arrangement pitch distance between the dispensing tips and the plurality of syringes is arranged in multiple lines.

### Advantageous Effects of Invention

According to the present invention, the plunger diameter can be increased as compared to the related art, and dispensing can be performed in amounts ranging from a slight amount to a great amount. Problems, configurations, and effects other than those described above will be apparent from description of embodiments below.

### Brief Description of Drawings

[FIG. 1] FIG. 1 is a diagram showing one example of the configuration of an analysis device including a multichannel dispenser of a first embodiment.
[FIG. 2] FIG. 2 is a view showing one example of the configuration of the multichannel dispenser of the first embodiment.
[FIG. 3] FIG. 3 is a sectional view taken along A-A line in FIG. 2.
[FIG. 4] FIG. 4 is a view showing a state when the one example of the configuration of the multichannel dispenser of the first embodiment is viewed from a different angle.
[FIG. 5] FIG. 5 is a view showing one example of the configuration of a multichannel dispenser of a second embodiment.
[FIG. 6] FIG. 6 is a view showing a state when the one example of the configuration of the multichannel dispenser of the second embodiment is viewed from a different angle.
[FIG. 7] FIG. 7 is a view showing one example of the configuration of a multichannel dispenser of a third embodiment.

### Description of Embodiments

Hereinafter, embodiments of a dispenser and an analysis device according to the present invention will be described with reference to the drawings. Note that in the drawings used in the present specification, the same or similar reference numerals are used to represent the same or corresponding components, and repeated description of these components may be omitted.

### <First Embodiment>

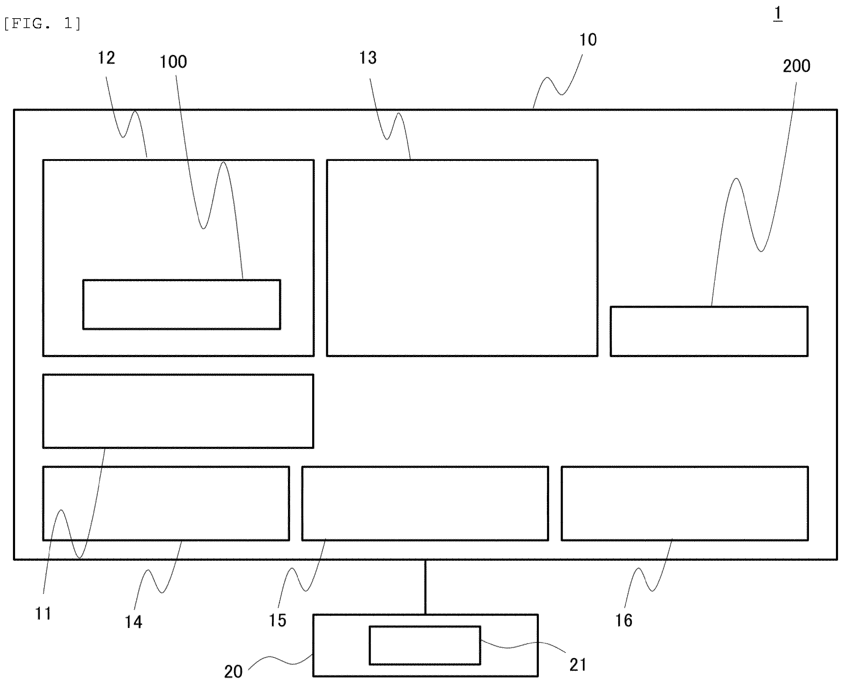

A first embodiment of the dispenser and the analysis device according to the present invention will be described with reference to FIGS. 1 to 4.

First, an overall configuration of the analysis device will be described with reference to FIG. 1. FIG. 1 is a block diagram showing the outline of the analysis device of the present embodiment.

The analysis device 1 includes, for example, an analyzer 10 having, e.g., a sample storage 11, a multichannel dispenser 100, an extractor 12, a single-channel dispenser 200, a reactor 13, a reactor consumable item area 14, an extraction consumable item area 15, and a reagent storage 16 and an operator 20.

The sample storage 11 is a unit into and from which a sample rack is injected and collected, and temporarily stores one or more sample racks holding a sample container(s) housing an injected sample to be analyzed and temporarily stores one or more sample racks to be collected.

The reactor consumable item area 14 is an area where various consumable items to be used for sample detection in the reactor 13 are placed and stored.

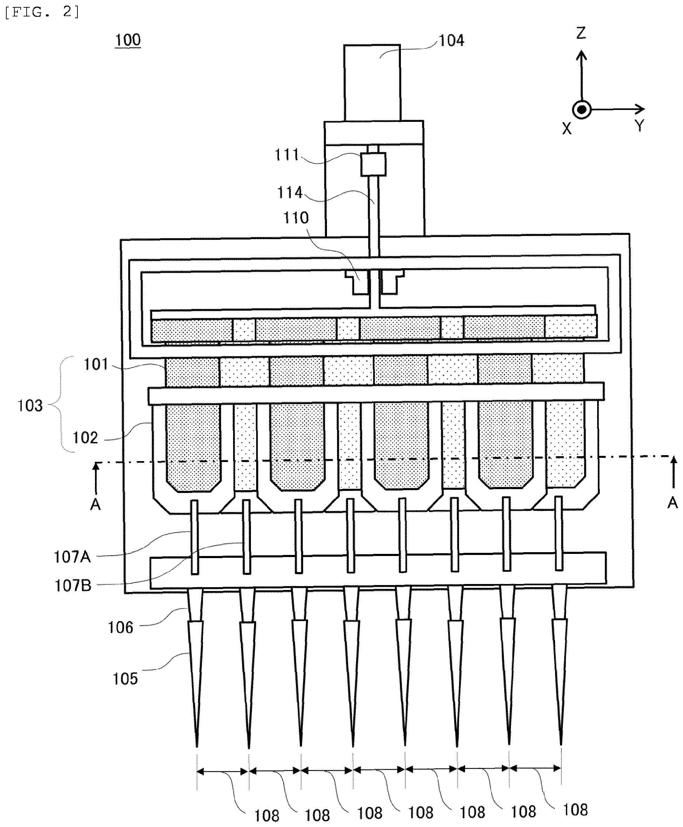

The extraction consumable item area 15 is an area where various consumable items (e.g., dispensing tip 105 (see, e.g., FIG. 2)) to be used for extraction of a specific component from the sample in the extractor 12 are placed and stored.

The reagent storage 16 is an area where various reagents to be used for sample detection in the reactor 13 are placed and stored.

The multichannel dispenser 100 is a unit that dispenses the sample to the extractor 12 from the sample container mounted on the sample rack in the sample storage 11, and moves above the sample storage 11 and the extractor 12. Details of the structure thereof will be described later.

The extractor 12 is a unit that acquires a biomolecule containing a measurement target from the injected sample in the sample storage 11.

The single-channel dispenser 200 is a unit that dispenses the reagent from the reagent storage 16 to the biomolecule in the extractor 12 or the reactor 13, has a drive mechanism in X-axis, Y-axis, and Z-axis directions and a dispensing probe, and moves above the reagent storage 16, the extractor 12, and the reactor 13.

The reactor 13 is a unit that measures the biomolecule acquired in the extractor 12 from the injected sample in the sample storage 11.

The number of extractors 12 and the number of reactors 13 are examples, and arbitrary numbers of one or more may be employed. Similarly, the example where one multichannel dispenser 100 and one single-channel dispenser 200 are provided has been described, but two or more multichannel dispensers 100 and two or more single-channel dispensers 200 may be provided.

Further, the analyzer 10 of the analysis device 1 is connected to the operator 20 in a wired or wireless manner via a communication line.

The operator 20 includes, for example, a display and a controller 21.

The display is a touch panel display also serving as an input, and displays various types of information on the analysis device 1, information on the sample to be analyzed, and information necessary for analysis execution. Note that an input device such as a mouse or a keyboard may be separately provided as the input.

The controller 21 is a unit that performs analysis arithmetic processing based on a measurement result from the reactor 13 and separately or integrally controls operation of each unit in the analysis device 1.

An information storage is, for example, a recording medium that stores, e.g., a control parameter corresponding to each unit and sample information on various samples.

The controller 21 may be configured as hardware using a dedicated circuit board, or be configured as software to be executed by a computer. In the case of the hardware, the hardware can be configured in such a manner that a plurality of arithmetic units that executes processing is integrated on a wiring substrate or in a semiconductor chip or package. In the case of the software, the software can be configured in such a manner that a high-speed general-purpose CPU is mounted on the computer and a program for executing desired arithmetic processing is executed. An existing device can also be upgraded using a recording medium recording such a program. These device, circuit, and computer are connected via a wired or wireless network, and data is transmitted and received therebetween as necessary.

The configuration of the analysis device 1 of the present embodiment has been described above.

Hereinafter, the flow of analysis in the analysis device 1 will be briefly described.

When the analysis starts after the sample rack installed with the sample container has been placed in the sample storage 11, the sample is dispensed from the sample storage 11 to the extractor 12 by the multichannel dispenser 100. Thereafter, depending on a request, an operation of extracting the biomolecule containing the measurement target is performed in the extractor 12. Predetermined reaction is made between the extract and the reagent from the reagent storage 16 in the reactor 13, and then, measurement is performed in the reactor 13.

Note that the analysis device to which the present invention is applied is not limited to the form shown in FIG. 1, and is also applicable to various devices that automatically dispense liquid such as a sample or a reagent to analyze the sample.

For example, in the above-described analysis device 1 of FIG. 1, the reagent is dispensed by the single-channel dispenser 200, but the dispenser of the present invention may be used for reagent dispensing as long as the analysis device analyzes the same analysis item for a large number of samples.

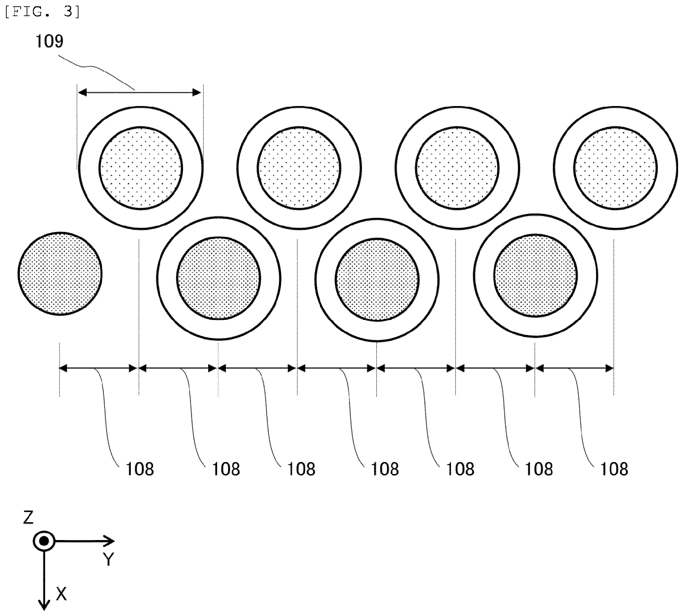

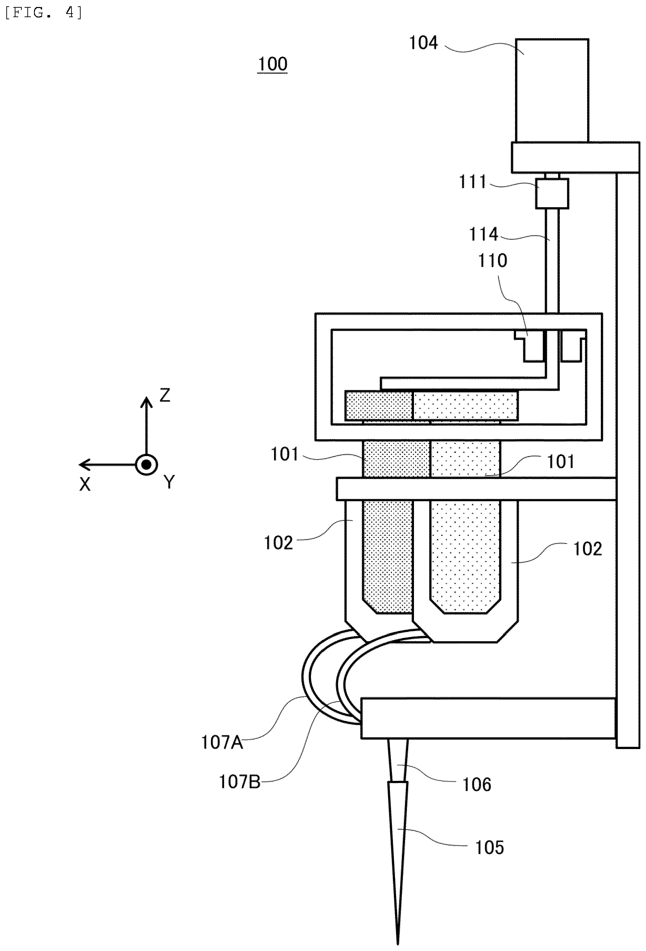

Next, a specific structure of the multichannel dispenser 100 according to the present embodiment will be described with reference to FIGS. 2 to 4. FIG. 2 is a view showing one example of the configuration of the multichannel dispenser of the first embodiment, FIG. 3 is a sectional view taken along A-A line in FIG. 2, and FIG. 4 is a view showing a state when the one example of the configuration of the multichannel dispenser of the first embodiment is viewed from a different angle.

The multichannel dispenser 100 includes, for example, a syringe 103, a drive motor 104, a tip end portion 106, tubes 107A, 107B, a ball screw 110, and a coupling 111.

Of these components, the syringe 103 includes a plunger 101 and a housing 102, and includes eight syringes 103 in total. The housing 102 is a scabbard-shaped member housing the plunger 101. Each plunger 101 is housed, on the lower end side, in the corresponding housing 102, and is fixed to a connection member 114 on the upper end side. The plunger 101 moves up and down along with upward and downward movement of the connection member 114 by rotary drive of the drive motor 104.

The tip end portion 106 to which the dispensing tip 105 is attached includes, in total, eight tip end portions 106, and these tip end portions 106 are connected to the syringes 103 through the tubes 107A, 107B in one-to-one correspondence.

The drive motor 104 is connected to the connection member 114 through the coupling 111, and is rotationally driven to move the connection member 114 up and down by a specified amount based on a pitch specified for the ball screw 110. Accordingly, each plunger 101, a state end portion of which is fixed to the connection member 114, also moves up and down to change the volume of working fluid (here, air) in the housing 102 and the tube 107A, 107B. In this manner, a sample dispensing or discharging operation is executed.

As shown in FIGS. 2 and 4, in the present embodiment, a pitch distance 108 between adjacent ones of the dispensing tips 105 is not changed from that of a related dispenser or is not changed from a specified value, and the eight dispensing tips 105 are arranged in line in the Y-direction without the positions thereof in the X-direction changed. On the other hand, the syringes 103 are arranged in multiple lines as shown in FIGS. 2 to 4.

Particularly, as shown in FIG. 3, the eight syringes 103 are arranged zigzag. Thus, at least one or more of the eight syringes 103 are disposed such that the position of the center axis thereof in the X-direction is shifted from the positions of the center axes of the dispensing tip 105 and the tip end portion 106 in the X-direction.

More specifically, the syringe 103 closest to a negative side in the Y-direction and the third syringe 103, fifth syringe 103, and seventh syringe 103 from the negative side in the figure are at the same position in the X-direction, and the second syringe 103, fourth syringe 103, sixth syringe 103, and eighth syringe 103 from the negative side are at the same position in the X-direction.

Further, as shown in FIG. 3, in the present embodiment, the outer diameter 109 of the housing 102 is greater than the pitch distance 108 between adjacent ones of the dispensing tips 105 in order to perform dispensing in amounts ranging from a slight amount to a great amount.

The syringes 103 including the plungers 101 are placed zigzag in the front-back direction as described above, and therefore, the outer diameter of the plunger 101 can be increased to twice the pitch distance 108 between the dispensing tips 105 in principle. In this case, as compared to a case where plungers are arranged side by side, the plunger diameter can be increased four to ten times, and therefore, the movement distance of the plunger 101 in the up-down direction (Z-direction in the figure) is 1/16 to 1/100 times as compared to a related structure, and if simply calculated, movement time can also be shortened 1/16 to 1/100 times. Thus, dispensing can be easily performed in amounts ranging from a slight amount to a great amount, and is also applicable to continuous dispensing and deep well.

A distance between the syringe 103 and the dispensing tip 105 is preferably constant for the plurality of tubes 107A, 107B. Thus, as shown in, for example, FIG. 4, the tubes 107A connecting the syringes 103 (syringe 103 closest to the negative side in the Y-direction and third syringe 103, fifth syringe 103, and seventh syringe 103 from the negative side in the figure) on a positive side in the X-direction and the dispensing tips 105 protrude to the positive side in the X-direction as compared to the tubes 107B connecting the syringes 103 (second syringe 103, fourth syringe 103, sixth syringe 103, and eighth syringe 103 from the negative side in the figure) on a negative side in the X-direction and the dispensing tips 105, and therefore, the tubes 107B for the syringes 103 on the negative side in the X-direction can gain more distance as compared to those for the syringes 103 on the positive side in the X-direction.

Alternatively, the volume of the working fluid between the syringe 103 and the dispensing tip 105 may be constant for the plurality of tubes 107A, 107B. In this case, for example, the tube 107A and the tube 107B may have different cross-sectional areas in an axial direction.

In the present embodiment, one drive motor 104 may be provided so that the capacity of the sample dispensed by one up-down operation (dispensing operation) can be the same for the eight syringes 103.

Next, the effects of the present embodiment will be described.

In the analysis device 1 of the first embodiment of the present invention including the sample storage 11 into which the injected sample is stored, the reactor 13 that measures the specific substance in the injected sample in the sample storage 11, the multichannel dispenser 100 that dispenses any one or more of the injected sample in the sample storage 11 and the reagent to be reacted with the sample, and the controller 21 that controls operation of each unit of the device, the multichannel dispenser 100 includes the plurality of syringes 103 each of which includes the plunger 101 and the housing 102, the drive motor 104 that drives at least one of the plungers 101, the tip end portions 106 to each of which the dispensing tip 105 is attached, and the tubes 107A, 107B causing the syringes 103 and the tip end portions 106 to communicate with each other, the outer diameter 109 of the housing 102 is greater than the pitch distance 108 between the dispensing tips 105, and the plurality of syringes 103 is arranged in multiple lines.

With this configuration, it is possible to increase the diameter of the plunger 101 as compared to a case where the plungers are arranged in line as in the related art and to perform dispensing in amounts ranging from a slight amount to a great amount.

The plurality of syringes 103 arranged in multiple lines is arranged zigzag, and therefore, can be densely arranged and increased in diameter. Thus, an increase in the size of the periphery of the syringes 103 can be suppressed while an increase in the size of the multichannel dispenser 100 is avoided and the diameter of the plunger 101 is increased.

Further, one drive motor 104 is provided so that a drive system can be simplified and space saving and cost reduction can be achieved.

### <Second Embodiment>

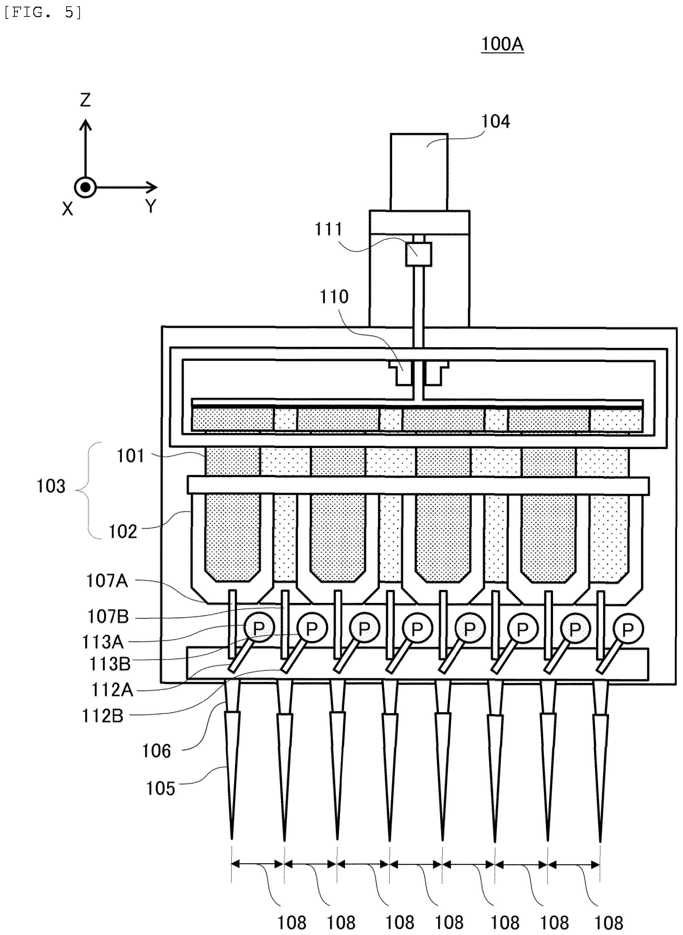

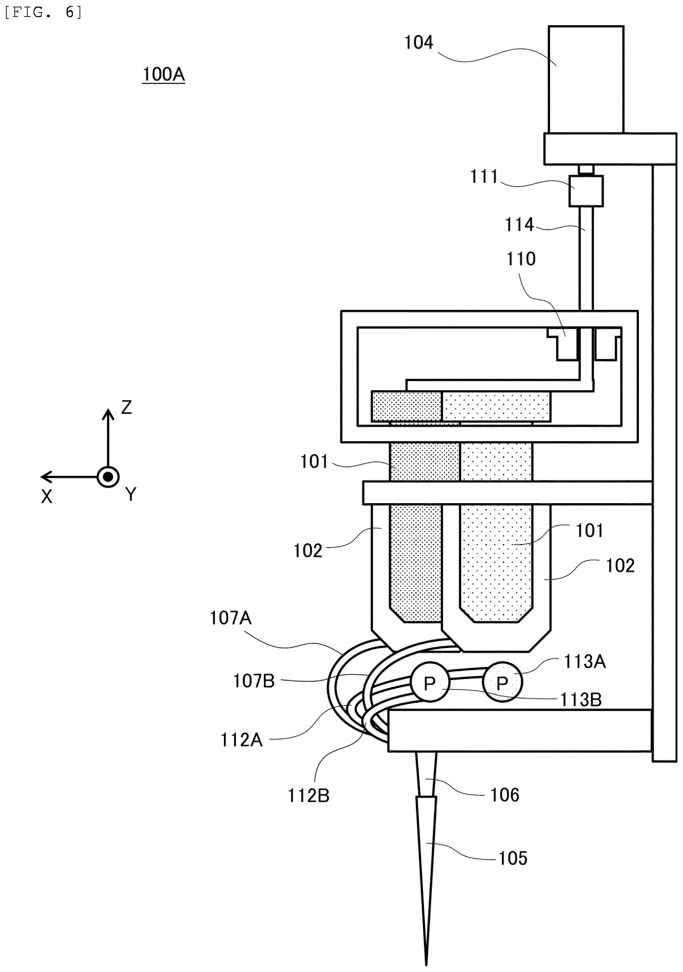

A dispenser and an analysis device according to a second embodiment of the present invention will be described with reference to FIGS. 5 and 6. FIG. 5 is a view showing one example of the configuration of a multichannel dispenser of the second embodiment, and FIG. 6 is a view showing a state when the one example of the configuration of the multichannel dispenser of the second embodiment is viewed from a different angle.

The multichannel dispenser 100A shown in FIGS. 5 and 6 is different from the multichannel dispenser 100 of the first embodiment in that the multichannel dispenser 100A further includes pressure sensors 113A, 113B that detect the pressures of tubes 107A, 107B and pressure pipes 112A, 112B connecting the tubes 107A, 107B and the pressure sensors 113A, 113B.

The multichannel dispenser 100A of the present embodiment is the same as the multichannel dispenser 100 of the first embodiment in that the multichannel dispenser 100A includes eight syringes 103, the eight syringes 103 are arranged zigzag in multiple lines, and the outer diameter 109 of a housing 102 is greater than a pitch distance 108 between adjacent ones of dispensing tips 105.

The differences are that the multichannel dispenser 100A of the present embodiment includes, in total, the eight pressure sensors 113A, 113B as described above and the pressure sensors 113A, 113B are arranged zigzag in multiple lines. More specifically, the plurality of pressure sensors 113A, 113B is arranged zigzag in a manner opposite to the zigzag arrangement of the plurality of syringes 103.

As shown in FIG. 6, the pressure sensors 113A connected to the tubes 107A connecting the syringes 103 (syringe 103 closest to a negative side in the Y-direction and third syringe 103, fifth syringe 103, and seventh syringe 103 from the negative side in the figure) on a positive side in the X-direction and the dispensing tips 105 are arranged on a negative side in the X-direction with respect to the positions of the pressure sensors 113B connected to the tubes 107B connecting the syringes 103 (second syringe 103, fourth syringe 103, sixth syringe 103, and eighth syringe 103 from the negative side) on the negative side in the X-direction in the figure and the dispensing tips 105, and therefore, the plurality of pressure sensors 113A, 113B is arranged zigzag in the manner opposite to the zigzag arrangement of the plurality of syringes 103.

The sum of a distance between the pressure sensor 113A, 113B and the syringe 103 and a distance between the syringe 103 and the dispensing tip 105 is preferably constant for the plurality of tubes 107A, 107B and the plurality of pressure pipes 112A, 112B.

Alternatively, the sum of the volume of working fluid between the pressure sensor 113A, 113B and the syringe 103 and the volume of working fluid between the syringe 103 and the dispensing tip 105 is preferably constant for the plurality of tubes 107A, 107B and the plurality of pressure pipes 112A, 112B.

Other configurations and operations are substantially the same as the configurations and operations of the dispenser and the analysis device according to the first embodiment above, and details thereof will be omitted.

In the dispenser and the analysis device according to the second embodiment of the present invention, effects substantially similar to those of the dispenser and the analysis device according to the first embodiment above are also obtained.

The plurality of pressure sensors 113A, 113B that detects the pressures of the tubes 107A, 107B is provided and is arranged zigzag in multiple lines, and therefore, a limitation on the sizes of the pressure sensors 113A, 113B due to a narrow arrangement interval can be reduced, and the degree of freedom in design can be improved.

Further, the plurality of pressure sensors 113A, 113B is arranged zigzag in the manner opposite to the zigzag arrangement of the plurality of syringes 103, and therefore, a volume difference corresponding to a length difference between the tube 107A and the tube 107B longer than the tube 107A can be easily absorbed by the pressure pipe 112A longer than the pressure pipe 112B, and the volume difference of the tubes 107A, 107B and the pressure pipes 112A, 112B can be further reduced.

The plurality of pressure sensors 113A, 113B that detects the pressures of the tubes 107A, 107B is provided, and the sum of the distance between the pressure sensor 113A, 113B and the syringe 103 and the distance between the syringe 103 and the dispensing tip 105 is constant for the plurality of tubes 107A, 107B and the plurality of pressure pipes 112A, 112B, or the plurality of pressure sensors 113A, 113B that detects the pressures of the tubes 107A, 107B is provided and the sum of the volume of the working fluid between the pressure sensor 113A, 113B and the syringe 103 and the volume of the working fluid between the syringe 103 and the dispensing tip 105 is constant for the plurality of tubes 107A, 107B and the plurality of pressure pipes 112A, 112B. Thus, a difference in the amount of sample to be dispensed among the plurality of syringes 103 can be significantly reduced, and higher-accuracy dispensing can be achieved.

### <Third Embodiment>

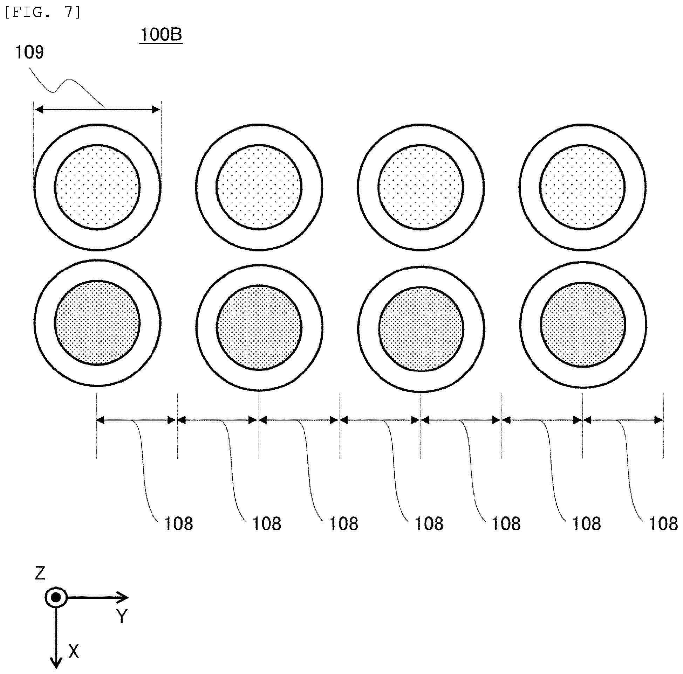

A dispenser and an analysis device according to a third embodiment of the present invention will be described with reference to FIG. 7. FIG. 7 is a view showing one example of the configuration of a multichannel dispenser of the third embodiment.

In the multichannel dispenser 100B of the present embodiment shown in FIG. 7, syringes 103 are arranged in multiple lines as in the multichannel dispenser 100 of the first embodiment and the multichannel dispenser 100A of the second embodiment, whereas the syringes 103 are not arranged zigzag, but are arranged such that the Y-direction positions of the syringes 103 on a positive side in the X-direction and the Y-direction positions of the syringes 103 on a negative side in the X-direction are the same as each other.

Other configurations and operations are substantially the same as the configurations and operations of the dispenser and the analysis device according to the first embodiment above, and details thereof will be omitted.

In the dispenser and the analysis device according to the third embodiment of the present invention, effects substantially similar to those of the dispenser and the analysis device according to the first embodiment above are also obtained.

### <Others>

The present invention is not limited to the above-described embodiments, and includes various modifications. The above-described embodiments have been described in detail for the sake of easy understanding of the present invention, and the present invention is not limited to one including all the configurations described above.

Some configurations of a certain embodiment may be replaced with those of other embodiments, and the configurations of other embodiments may be added to the configuration of a certain embodiment. Addition of other configurations, omission, and replacement may be made to some configurations of each embodiment.

### Reference Signs List

1: analysis device
10: analyzer
11: sample storage (receiver)
12: extractor
13: reactor (measurer)
14: reactor consumable item area
15: extraction consumable item area
16: reagent storage
20: operator
21: controller
100, 100A, 100B: multichannel dispenser (dispenser)
101: plunger
102: housing
103: syringe
104: drive motor
105: dispensing tip
106: tip end portion
107A, 107B: tube
108: pitch distance
109: outer diameter
110: ball screw
111: coupling
112A, 112B: pressure pipe
113A, 113B: pressure sensor
114: connection member
200: single-channel dispenser

## Claims

1. A dispenser comprising:
a plurality of syringes each of which includes a plunger and a housing;
a drive motor that drives at least one of the plungers;
one or more tip end portions to which one or more dispensing tips are to be attached; and
one or more tubes causing the syringes and the tip end portions to communicate with each other,
wherein an outer diameter of the housing is greater than an arrangement pitch distance between the dispensing tips, and
the plurality of syringes is arranged in multiple lines.

2. The dispenser according to claim 1, wherein
the plurality of syringes arranged in the multiple lines is arranged zigzag.

3. The dispenser according to claim 2, further comprising:
a plurality of pressure sensors that detects pressures of the tubes,
wherein the plurality of pressure sensors is arranged zigzag in multiple lines.

4. The dispenser according to claim 3, wherein
the plurality of pressure sensors is arranged zigzag in a manner opposite to zigzag arrangement of the plurality of syringes.

5. The dispenser according to claim 2, further comprising:
a plurality of pressure sensors that detects pressures of the tubes,
wherein a sum of a distance between each pressure sensor and each syringe and a distance between each syringe and the dispensing tip is constant for the tubes.

6. The dispenser according to claim 2, further comprising:
a plurality of pressure sensors that detects pressures of the tubes,
wherein a sum of a volume of working fluid between each pressure sensor and each syringe and a volume of working fluid between each syringe and the dispensing tip is constant for the tubes.

7. The dispenser according to claim 1, wherein
the drive motor includes one drive motor.

8. An analysis device comprising:
a receiver that receives an injected sample;
a measurer that measures a specific substance in the injected sample in the receiver;
a dispenser that dispenses one or more of the injected sample in the receiver and a reagent to be reacted with the sample; and
a controller that controls operation of each unit of the analysis device,
wherein the dispenser includes
a plurality of syringes each of which includes a plunger and a housing,
a drive motor that drives at least one of the plungers,
one or more tip end portions to which one or more dispensing tips are to be attached, and
one or more tubes causing the syringes and the tip end portions to communicate with each other,
an outer diameter of the housing is greater than an arrangement pitch distance between the dispensing tips, and
the plurality of syringes is arranged in multiple lines.

9. The analysis device according to claim 8, wherein
the plurality of syringes arranged in the multiple lines is arranged zigzag.

10. The analysis device according to claim 9, further comprising:
a plurality of pressure sensors that detects pressures of the tubes,
wherein the plurality of pressure sensors is arranged zigzag in multiple lines.

11. The analysis device according to claim 10, wherein
the plurality of pressure sensors is arranged zigzag in a manner opposite to zigzag arrangement of the plurality of syringes.

12. The analysis device according to claim 9, further comprising:
a plurality of pressure sensors that detects pressures of the tubes,
wherein a sum of a distance between each pressure sensor and each syringe and a distance between each syringe and the dispensing tip is constant for the plurality of tubes.

13. The analysis device according to claim 9, further comprising:
a plurality of pressure sensors that detects pressures of the tubes,
wherein a sum of a volume of working fluid between each pressure sensor and each syringe and a volume of working fluid between each syringe and the dispensing tip is constant for the plurality of tubes.

14. The analysis device according to claim 8, wherein
the drive motor includes one drive motor.
